# EUROPEAN PATENT APPLICATION

(11) **EP 4 343 188 A1**
(43) Date of publication of application: **27.03.2024**
(21) Application number: 22849073.6
(22) Date of filing: 22.06.2022
(51) Int. Cl.: F16K 31/06, F02M 51/06

(54) **SOLENOID DEVICE AND SOLENOID VALVE OF FUEL INJECTION DEVICE**

(30) Priority: 27.07.2021 JP 2021122449
(71) Applicant: MITSUBISHI HEAVY INDUSTRIES ENGINE & TURBOCHARGER, LTD., Sagamihara-shi, Kanagawa 252-5293 (JP)
(72) Inventor: OGAWA, Hisao, Sagamihara-shi, Kanagawa 252-5293 (JP)
(74) Representative: Hoffmann Eitle
(86) International application number: PCT/JP2022/024917
(87) International publication number: WO 2023/007998

(57) **Abstract**

The solenoid device drives a valve unit of a solenoid valve provided to a fuel injection device by an electromagnetic force and comprises: a core formed in a cylindrical shape and having an opposing surface that opposes the valve unit; a coil wound around the core; and a recessed portion formed at a position in the opposing surface of the core that overlaps with the valve unit as viewed from the axial direction of the center axis of the core.

## Description

### Technical Field

The present disclosure relates to a solenoid device and a solenoid valve of a fuel injection device.

### Background Art

A common rail type fuel injection device applied to a diesel engine or the like includes a fuel pump, a common rail, and a fuel injection valve. The fuel pump sucks fuel from a fuel tank, pressurizes the fuel, and supplies the fuel to the common rail as high-pressure fuel. The common rail maintains the high-pressure fuel supplied from the fuel pump at a predetermined pressure. The fuel injection valve opens and closes an injection valve to inject the high-pressure fuel from the common rail into a combustion chamber of the diesel engine.

The fuel injection valve has, for example, a solenoid valve having a solenoid device that generates an electromagnetic force by causing a current to flow through a coil wound around a core, and a valve unit formed using a magnetic body. In such a solenoid valve, for example, a configuration in which a fuel flow path is pressed by causing an elastic force to act on the valve unit is made, and in a case where an electromagnetic force is not generated by the solenoid device, the fuel flow path is pressed to be closed by the elastic force. Further, in a case where an electromagnetic force is generated by the solenoid device, the valve unit is pulled toward a core side of the solenoid device by the electromagnetic force, and the valve unit is separated from the flow path to cause the flow path to be in an open state (for example, refer to PTL 1 and the like).

### Citation List

### Patent Literature

[PTL 1] Japanese Unexamined Patent Application Publication No. 2010-101349

### Summary of Invention

### Technical Problem

In the solenoid valve as described above, for example, when the valve unit separates from the core, a negative pressure temporarily occurs in a gap between the valve unit and the core, and cavitation may occur. The cavitation collapses when a pressure in the gap between the valve unit and the core is restored, and damages a part of the core. For this reason, for example, if the solenoid device is operated for a long period of time, reliability of operation may decrease.

The present disclosure has been made in view of the above, and an object of the present disclosure is to provide a solenoid device and a solenoid valve of a fuel injection device that are excellent in cavitation wear resistance and can maintain reliability of operation.

### Solution to Problem

A solenoid device according to the present disclosure is a solenoid device that drives a valve unit of a solenoid valve provided to a fuel injection device by an electromagnetic force, the solenoid device includes a core formed in a tubular shape and having an opposing surface that opposes the valve unit, a coil wound around the core; and a recessed portion provided in the opposing surface of the core at a position that overlaps with the valve unit as viewed from an axial direction of a central axis of the core.

A solenoid valve of a fuel injection device according to the present disclosure includes the solenoid device described above, and a valve unit that is formed using a magnetic body, that is disposed to oppose the opposing surface of the core, to which an elastic force is applied in a direction away from the core in the axial direction, that presses, in a case where an electromagnetic force is not generated in the solenoid device, a fuel flow passage by the elastic force to close the flow passage, and that opens, in a case where an electromagnetic force is generated in the solenoid device, the flow passage by being pulled toward the core to a position, at which the valve unit comes into contact with the opposing surface, to be separated from the flow passage by the electromagnetic force.

### Advantageous Effects of Invention

According to the present disclosure, it is possible to provide a solenoid device and a solenoid valve of a fuel injection device that are excellent in cavitation wear resistance and can maintain reliability of operation.

### Brief Description of Drawings

Fig. 1 is a schematic configuration diagram showing an example of a fuel injection device of the present embodiment.
Fig. 2 is a vertical sectional view showing an example of a fuel injection valve.
Fig. 3 is a vertical sectional view showing an example of a solenoid valve.
Fig. 4 is a diagram showing an example of a solenoid device shown in Fig. 3 as viewed from a tip end side.
Fig. 5 is a diagram showing an example of a cross-sectional configuration of a recessed portion.
Fig. 6 is a diagram showing an example of a cross-sectional configuration of a recessed portion.
Fig. 7 is a diagram showing an example of a cross-sectional configuration of a recessed portion.
Fig. 8 is a vertical sectional view showing an example of operation of the solenoid valve.

### Description of Embodiments

Hereinafter, an embodiment of a solenoid device and a solenoid valve of a fuel injection device according to the present disclosure will be described with reference to the drawings. The invention is not limited to the embodiment. Further, components in the following embodiment include components that can be easily replaced by those skilled in the art or components that are substantially the same.

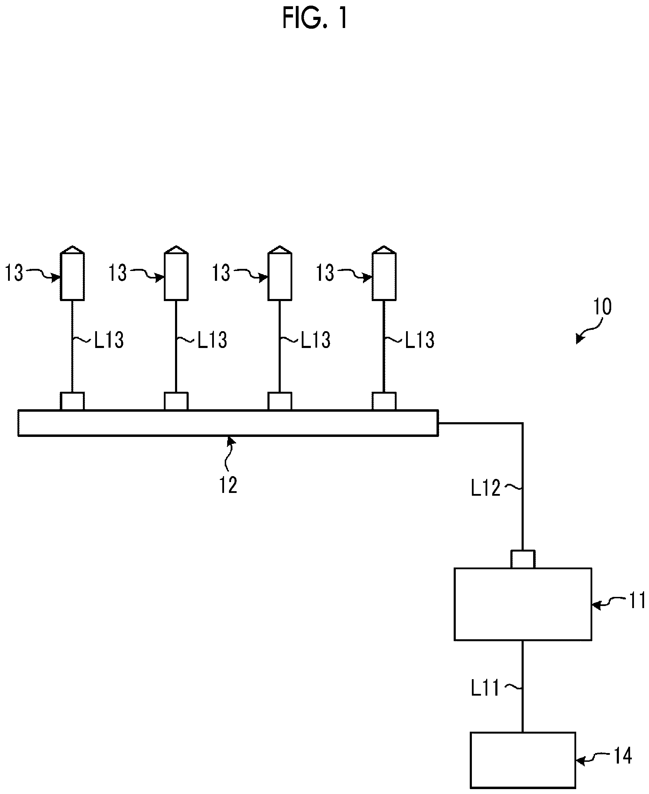

Fig. 1 is a schematic configuration diagram showing an example of a fuel injection device 10 of the present embodiment. As shown in Fig. 1, the fuel injection device 10 is installed in a diesel engine (internal combustion engine) . The fuel injection device 10 includes a fuel pump 11, a common rail 12, and a plurality of fuel injection valves 13.

A fuel tank 14 is connected to the fuel pump 11 via a fuel line L11. The fuel pump 11 sucks fuel stored in the fuel tank 14 from the fuel line L11 and pressurizes the fuel to generate high-pressure fuel. A common rail 12 is connected to the fuel pump 11 via a fuel high-pressure line L12. The common rail 12 maintains the high-pressure fuel supplied from the fuel pump 11 at a predetermined pressure. The fuel injection valves 13 are respectively connected to the common rail 12 via a plurality of (four in the present embodiment) fuel supply lines L13. The fuel injection valve 13 opens and closes a solenoid valve to inject the high-pressure fuel of the common rail 12 into each cylinder (combustion chamber) of the diesel engine.

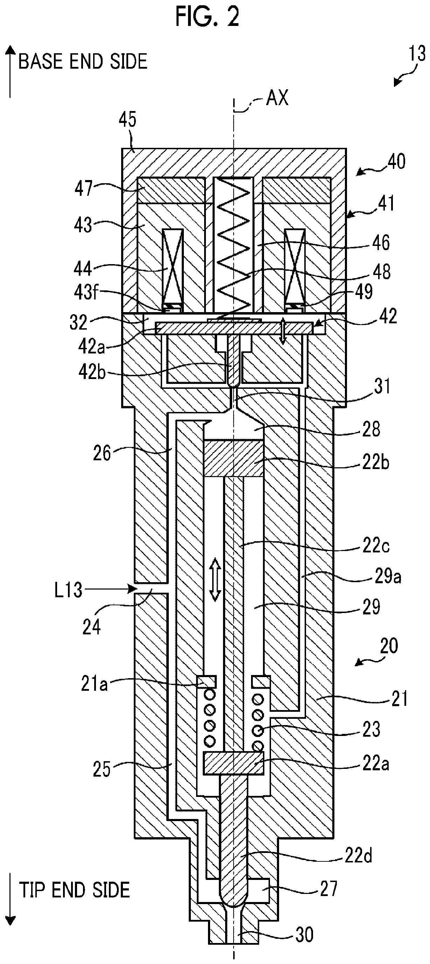

Fig. 2 is a vertical sectional view showing an example of the fuel injection valve 13. As shown in Fig. 2, the fuel injection valve 13 has a shape extending in an axial direction of a central axis AX, and has an injection unit 20 and a solenoid valve 40. Hereinafter, in describing a configuration of the fuel injection valve 13, a fuel injection port 30 side in the axial direction of the central axis AX will be referred to as a tip end side, and a solenoid valve 40 side will be referred to as a base end side.

The injection unit 20 has a casing 21 and a piston valve 22. The casing 21 includes a fuel inflow port 24, an injection-side flow path 25, a control-side flow path 26, an injection-side pressure chamber 27, a control-side pressure chamber 28, a cylinder chamber 29, a fuel injection port 30, a fuel discharge port 31, and a solenoid valve-side pressure chamber 32.

The fuel from the fuel supply line L13 flows into the fuel inflow port 24. The injection-side flow path 25 connects the fuel inflow port 24 and the injection-side pressure chamber 27. The control-side flow path 26 connects the fuel inflow port 24 and the control-side pressure chamber 28.

The injection-side pressure chamber 27 is connected to the fuel injection port 30. The fuel injection port 30 is disposed at an end portion on a tip end side of the casing 21, and jets fuel toward each cylinder of the diesel engine.

The control-side pressure chamber 28 is connected to the fuel discharge port 31. The fuel discharge port 31 is disposed at an end portion on a base end side of the casing 21, and is connected to the solenoid valve-side pressure chamber 32. The solenoid valve-side pressure chamber 32 is connected to the solenoid valve 40 (a space section 46d to be described later).

The cylinder chamber 29 is connected to the injection-side pressure chamber 27 and the control-side pressure chamber 28. The cylinder chamber 29 accommodates the piston valve 22. The cylinder chamber 29 is connected to the solenoid valve-side pressure chamber 32 via a flow path 29a.

The piston valve 22 is accommodated in the cylinder chamber 29 and is provided to be movable toward an injection-side pressure chamber 27 side or a control-side pressure chamber 28 side. The piston valve 22 has a spring seat member 22a, a control-side piston member 22b, a connecting member 22c, and a valve body 22d. The spring seat member 22a, the control-side piston member 22b, and the connecting member 22c are integrated. The spring seat member 22a receives an elastic force of an elastic member 23 to be described later. The control-side piston member 22b receives a pressure of the control-side pressure chamber 28. The connecting member 22c connects the spring seat member 22a and the control-side piston member 22b. The valve body 22d protrudes from the spring seat member 22a toward the tip end side in the axial direction of the central axis AX. The valve body 22d comes into contact with the spring seat member 22a by a resultant force of a receiving pressure from each pressure chamber and the elastic force. The valve body 22d is formed in a shape such that a tip portion thereof can close the fuel injection port 30. The valve body 22d receives a pressure of the injection-side pressure chamber 27.

In a case where the pressure of the injection-side pressure chamber 27 is smaller than a resultant force of the pressure of the control-side pressure chamber 28 and the elastic force of the elastic member 23, the piston valve 22 is in a state of being pressed toward the injection-side pressure chamber 27 side. In this case, the fuel injection port 30 is in a state of being closed by the valve body 22d. From this state, in a case where the pressure of the injection-side pressure chamber 27 becomes larger than the resultant force of the pressure of the control-side pressure chamber 28 and the elastic force of the elastic member 23, the piston valve 22 is in a state of being pressed toward the control-side pressure chamber 28 side. In this case, the valve body 22d is separated from the fuel injection port 30, and the fuel injection port 30 is in an open state.

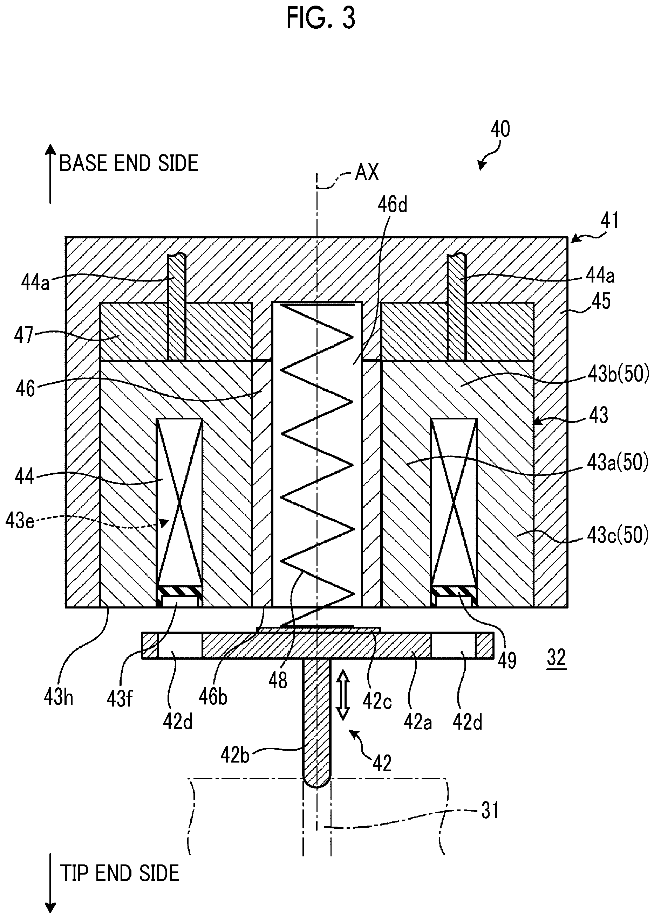

The solenoid valve 40 has a solenoid device 41 and a valve unit 42. Fig. 3 is a vertical sectional view showing an example of the solenoid valve 40. Fig. 3 shows a part of Fig. 2 in an enlarged scale. As shown in Fig. 3, the solenoid device 41 drives the valve unit 42 along the axial direction of the central axis AX by an electromagnetic force. The solenoid device 41 includes a core 43, a coil 44, a casing 45, a tubular member 46, and a terminal fixing member 47.

The core 43 has a magnetic body portion 50 and a sealing portion 49. The magnetic body portion 50 has a tubular portion 43a, a flange portion 43b, and a side surface part 43c. The tubular portion 43a is formed, for example, in a cylindrical shape. The flange portion 43b has, for example, a disk shape and is disposed on a base end side of the core 43. Each of the tubular portion 43a and the flange portion 43b is disposed such that each central axis thereof coincides with the central axis AX of the fuel injection valve 13.

The side surface part 43c has a cylindrical shape that involves the tubular portion 43a. The side surface part 43c is disposed with an interval in a radial direction from the tubular portion 43a and extends toward a tip end side. The tubular portion 43a, the flange portion 43b, and the side surface part 43c are formed using a magnetic body (magnetic body portion 50). The core 43 accommodates the coil 44 in a space section 43e surrounded by a tubular portion 43a, a flange portion 43b, and a side surface part 43c. That is, the tubular portion 43a, the flange portion 43b, and the side surface part 43c constitute the magnetic body portion 50 that is open to a valve unit 42 side, accommodates the coil 44, and has the annular space section 43e as viewed from the axial direction of the central axis AX. When viewed as a single body, the core 43 is provided with the space section 43e, but is actually in a state where the coil 44 is disposed. The space section 43e in which the coil 44 is disposed is sealed by the sealing portion 49. The sealing portion 49 is formed using, for example, a resin material. The core 43 has an opposing surface 43h, which will be described later, opposing the valve unit 42. The opposing surface 43h is disposed at an end portion on a tip end side of the core 43. In the present embodiment, an end portion on a tip end side of the tubular portion 43a, an end portion on a tip end side of the side surface part 43c, and an end portion on a tip end side of the sealing portion 49 constitute the opposing surface 43h.

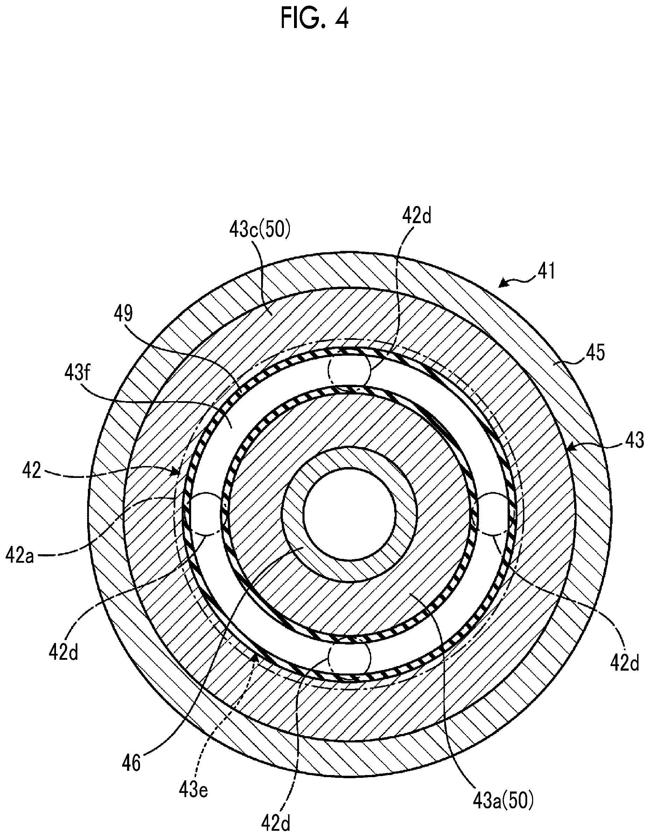

The sealing portion 49 has a recessed portion 43f on an end surface on the tip end side. The recessed portion 43f is formed in a state where a part of the sealing portion 49 is recessed toward the base end side. Fig. 4 is a diagram showing an example of the solenoid device 41 shown in Fig. 3 as viewed from the tip end side. As shown in Fig. 4, the recessed portion 43f has an annular shape centered on the central axis AX as viewed from the axial direction of the central axis AX. The recessed portion 43f is provided over one circumference in an axis-surrounding direction of the central axis AX. The recessed portion 43f is disposed at a position that overlaps a through-hole 42d of the valve unit 42, which will be described later, as viewed from the axial direction of the central axis AX.

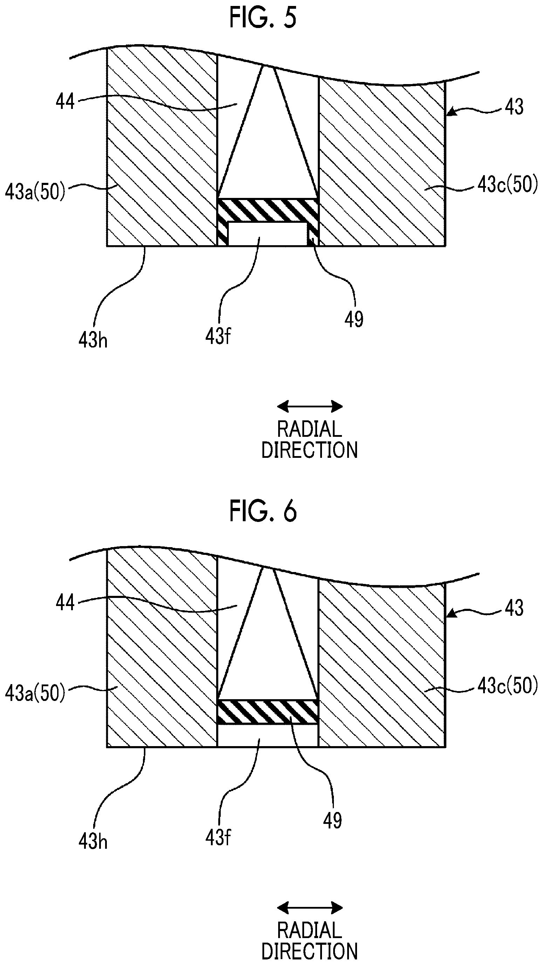

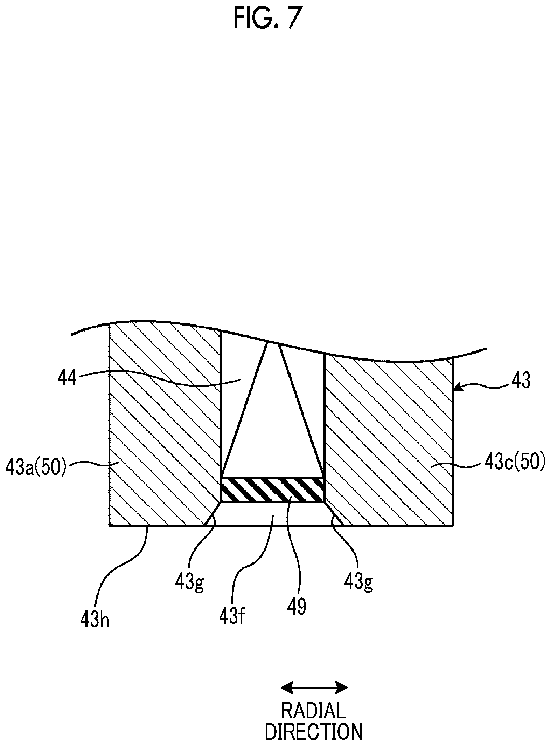

Figs. 5 to 7 are diagrams showing examples of a cross-sectional configuration of the recessed portion 43f. As shown in Fig. 5, the recessed portion 43f may be formed in a state where both sides of the sealing portion 49 in the radial direction are left. According to this configuration, the space section 43e can be more reliably sealed on both sides of the sealing portion 49 in the radial direction. In addition, as shown in Fig. 6, the recessed portion 43f may be formed to have a uniform depth over the entire radial direction. According to this configuration, in an end surface on the tip end side of the core 43, a sufficient area of the recessed portion 43f can be secured as viewed from the axial direction of the central axis AX. Further, as shown in Fig. 7, in addition to the configuration of Fig. 6, the core 43 may have a configuration in which the core 43 has a chamfered section 43g at an end portion of the space section 43e on a tip end side in the axial direction of the central axis AX. The chamfered section 43g is provided on an outer peripheral side of the tubular portion 43a and on an inner peripheral side of the side surface part 43c, respectively. Each of the chamfered sections 43g has a tapered shape that is inclined toward the base end side toward the space section 43e side.

As shown in Fig. 3, the coil 44 is disposed in a state of being wound around the tubular portion 43a. The coil 44 penetrates the casing 45, which will be described later, and is connected to a power source part (not shown). The solenoid device 41 generates an electromagnetic force by causing a current to flow through the coil 44.

The casing 45 accommodates the core 43 and the coil 44. The casing 45 is formed using, for example, a resin material. The casing 45 has a supporting part 45a that supports an elastic member 48 to be described later. Further, the terminal fixing member 47 is disposed between the core 43 and the casing 45, which will be described later, in the axial direction of the central axis AX, and fixes a terminal 44a connected to the coil 44. The terminal 44a penetrates the casing 45 and is drawn out to an outside. The terminal fixing member 47 is formed using, for example, a resin material or the like.

The tubular member 46 is disposed on an inner peripheral side of the core 43. The tubular member 46 is formed using, for example, a metallic material. The tubular member 46 may be metal that is a non-magnetic body. The tubular member 46 has, for example, a cylindrical shape, and is disposed such that a central axis thereof coincides with the central axis AX of the fuel injection valve 13. The tubular member 46 is disposed at a position where an end surface 46b on a tip end side comes into contact with the valve unit 42. In the present embodiment, the end surface 46b is flush with, for example, a tip end side end surface of the side surface part 43c of the core 43 and the tip end side end surface of the sealing portion 49.

The elastic member 48 is accommodated on an inner peripheral side of the tubular member 46 in a state where an end portion on a base end side is supported by the supporting part 45a of the casing 45. The elastic member 48 applies an elastic force to the valve unit 42 toward a tip end side in the axial direction of the central axis AX.

The valve unit 42 moves in the axial direction of the central axis AX by an electromagnetic force generated by the solenoid device 41. The valve unit 42 has an armature 42a, a valve body 42b, a stepped portion 42c, and a through-hole 42d. The armature 42a is formed using a magnetic body. The armature 42a has, for example, a disk shape. The armature 42a is disposed to oppose the end portion on the tip end side of the core 43 of the solenoid device 41. The valve body 42b extends from the armature 42a toward a tip end side. The valve body 42b is formed in a shape such that a tip portion thereof can close the fuel discharge port 31. The valve body 42b may be formed of a magnetic body or a non-magnetic body.

The through-hole 42d is provided to penetrate the armature 42a in the axial direction of the central axis AX. The through-holes 42d are disposed with intervals in the axis-surrounding direction of the central axis AX as viewed from the axial direction of the central axis AX. In the present embodiment, as shown by the one-point chain line in Fig. 4, for example, a case where the through-holes 42d are disposed at 90° intervals around the central axis AX is given as an example, but the present embodiment is not limited to this configuration.

Operation of the fuel injection valve 13 configured as described above will be described. In a case where no current is passed through the coil 44 of the solenoid device 41, no electromagnetic force is generated in the solenoid device 41. In this case, in the valve unit 42, the valve body 42b presses the fuel discharge port 31 toward the tip end side by the elastic force of the elastic member 48. As a result, the fuel discharge port 31 is in a closed state.

In a state where the fuel discharge port 31 is in a closed state, the resultant force of the receiving pressure of the control-side pressure chamber 28 and the elastic force of the elastic member 23 becomes larger than the receiving pressure of the injection-side pressure chamber 27. Therefore, the piston valve 22 presses the fuel injection port 30 to close the fuel injection port 30.

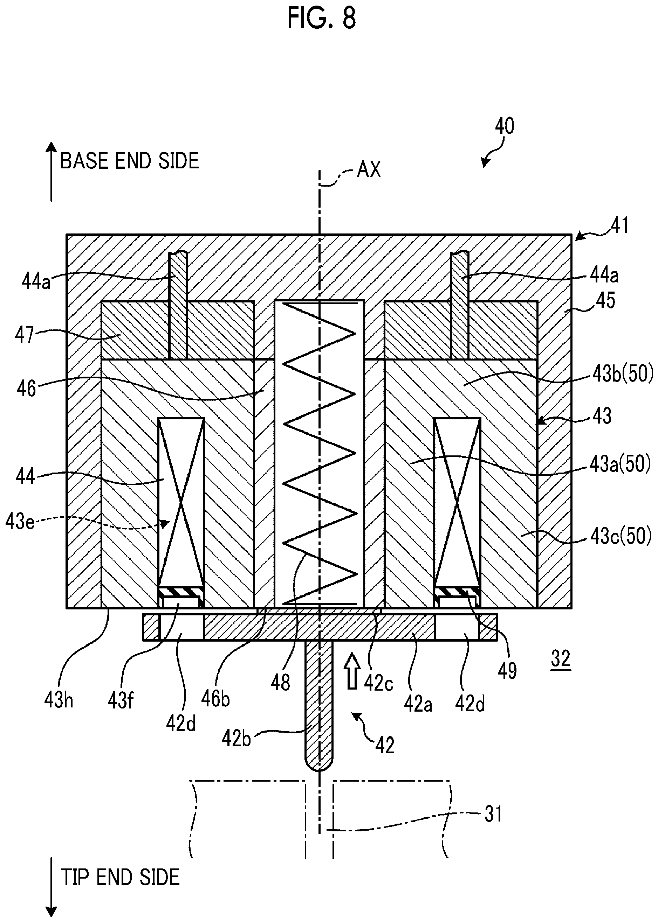

Further, in a case where a current is passed through the coil 44 of the solenoid device 41, an electromagnetic force is generated in the solenoid device 41. Fig. 8 is a vertical sectional view showing an example of operation of the solenoid valve 40. Fig. 8 shows an example in a case where a current is passed through the coil 44. As shown in Fig. 8, in a case where an electromagnetic force is generated in the solenoid device 41, in the valve unit 42, the armature 42a is pulled toward a core 43 side by the electromagnetic force, and the valve body 42b is separated from the fuel discharge port 31. As a result, the fuel discharge port 31 is in an open state.

By opening the fuel discharge port 31, the pressure of the control-side pressure chamber 28 is reduced. In a case where the resultant force of the receiving pressure of the control-side pressure chamber 28 and the elastic force of the elastic member 23 becomes smaller than the receiving pressure of the injection-side pressure chamber 27, the piston valve 22 moves to the control-side pressure chamber 28 side. In this case, the valve body 22d of the piston valve 22 is separated from the fuel injection port 30, and the fuel injection port 30 is in an open state. In a case where the fuel injection port 30 is in an open state, the fuel that has flowed from the fuel inflow port 24 into the injection-side pressure chamber 27 through the injection-side flow path 25 is injected from the fuel injection port 30.

In the above operation, in a case where the valve unit 42 is pulled toward the core 43 side by the electromagnetic force of the solenoid device 41, the stepped portion 42c of the valve unit 42 comes into contact with the end surface 46b of the tubular member 46, as shown in Fig. 8. In this case, the tubular member 46 functions as a stopper that restricts movement of the valve unit 42 toward the base end side.

After the stepped portion 42c of the valve unit 42 comes into contact with the end surface 46b of the tubular member 46, the electromagnetic force of the solenoid device 41 is turned off so that the valve unit 42 is pressed by the elastic force of the elastic member 48 toward the tip end side in the axial direction of the central axis AX and is separated from the core 43, and the valve body 42b seals the fuel discharge port 31. In the present embodiment, since the recessed portion 43f is provided on the end surface on the tip end side of the core 43, a region in which fuel can be disposed is secured between the core 43 and the valve unit 42. Since the region is provided, when the valve unit 42 moves in a direction away from the core 43, occurrence of cavitation is suppressed, and thus damage to the core 43 due to cavitation is suppressed.

As described above, the solenoid device 41 according to the present embodiment is the solenoid device 41 that drives the valve unit 42 of the solenoid valve 40 provided to the fuel injection device 10 by an electromagnetic force, and includes the core 43 formed in a tubular shape and having the opposing surface 43h that opposes the valve unit 42, the coil 44 wound around the core 43, and the recessed portion 43f provided in the opposing surface 43h of the core 43 at a position that overlaps with the valve unit 42 as viewed from the axial direction of the central axis AX of the core 43.

According to this configuration, since the recessed portion 43f is provided on the end surface on the tip end side of the core 43, a region in which fuel can be disposed is secured between the core 43 and the valve unit 42. Since the region is provided, for example, when the valve unit 42 moves in a direction away from the core 43, occurrence of cavitation is suppressed, and thus damage to the core 43 due to cavitation is suppressed. Accordingly, it is possible to provide the solenoid device 41 that is excellent in cavitation wear resistance and can maintain reliability of operation.

In the solenoid device 41 according to the present embodiment, the recessed portion 43f has an annular shape centered on the central axis AX as viewed from the axial direction of the central axis AX. According to this configuration, since a region in which fuel can be disposed can be secured over the entire axial direction of the central axis AX, occurrence of cavitation can be more reliably suppressed.

In the solenoid device 41 according to the present embodiment, the core 43 includes the magnetic body portion 50 that is formed using a magnetic body, is open to the valve unit 42 side, accommodates the coil 44, and includes the annular space section 43e as viewed from the axial direction, and the sealing portion 49 that is formed using a resin material and seals the space section 43e, and the recessed portion 43f is provided at the sealing portion 49. According to this configuration, since the recessed portion 43f is provided in a part of the core 43 that does not affect the generation of an electromagnetic force, occurrence of cavitation can be suppressed without lowering drivability of the valve unit 42.

In the solenoid device 41 according to the present embodiment, the magnetic body portion 50 includes the chamfered section 43g at the end portion of the space section 43e on the valve unit 42 side in the axial direction. According to this configuration, occurrence of cavitation can be more reliably suppressed.

The solenoid valve 40 of the fuel injection device 10 according to the present embodiment includes the solenoid device 41 described above, and the valve unit 42 that is formed using a magnetic body, that is disposed to oppose the opposing surface 43h of the core 43, to which an elastic force is applied in the direction away from the core 43 in the axial direction, that presses, in a case where an electromagnetic force is not generated in the solenoid device 41, a fuel flow passage by the elastic force to close the flow passage, and that opens, in a case where an electromagnetic force is generated in the solenoid device 41, the flow passage by being pulled toward the core 43 to a position, at which the valve unit 42 comes into contact with the opposing surface 43h, to be separated from the flow passage by the electromagnetic force.

According to this configuration, since the solenoid device 41, which can suppress damage to the core 43 due to cavitation and can maintain reliability of operation by suppressing occurrence of cavitation during driving of the valve unit 42, is included, it is possible to obtain the solenoid valve 40, for example, having a long life.

In the solenoid valve 40 of the fuel injection device 10 according to the present embodiment, the valve unit 42 includes the armature 42a that opposes the opposing surface 43h, the valve body 42b that extends from the armature 42a in the axial direction, the armature 42a includes the through-hole 42d that penetrates the armature 42a in the axial direction, and the recessed portion 43f is disposed at a position that overlaps with the through-hole 42d as viewed from the axial direction. According to this configuration, since the recessed portion 43f communicates with the tip end side of the valve unit 42 via the through-hole 42d, it is possible to more reliably suppress occurrence of cavitation when the valve unit 42 moves.

The technical scope of the present invention is not limited to the embodiment described above, and can be appropriately changed without departing from the scope of the present invention. For example, in the embodiment described above, the configuration in which the solenoid valve 40 is provided in the fuel injection valve 13 of the fuel injection device 10 has been described as an example, but the present invention is not limited thereto. The solenoid valve 40 may be provided at another portion of the fuel injection device 10.

Further, a form of the fuel injection device 10 and a form of the fuel pump 11 are not limited to the embodiment described above. For example, the number of the common rail 12 and the fuel injection valves 13, a connection position of the fuel pump 11, and the like can be appropriately set.

### Reference Signs List

10 fuel injection device
11 fuel pump
12 common rail
13 fuel injection valve
14 fuel tank
20 injection unit
21, 45 casing
22 piston valve
22a spring seat member
22b control-side piston member
22c connecting member
22d, 42b valve body
23, 48 elastic member
24 fuel inflow port
25 injection-side flow path
26 control-side flow path
27 injection-side pressure chamber
28 control-side pressure chamber
29 cylinder chamber
30 fuel injection port
31 fuel discharge port
32 solenoid valve-side pressure chamber
40 solenoid valve
41 solenoid device
42 valve unit
42a armature
42c stepped portion
42d through-hole
43 core
43a tubular portion
43b flange portion
43c side surface part
43e space section
43g chamfered section
43h opposing surface
44 coil
45a supporting part
46 tubular member
46b end surface
47 terminal fixing member
49 sealing portion
43f recessed portion
50 magnetic body portion
AX central axis
L11 fuel line
L12 fuel high-pressure line
L13 fuel supply line

## Claims

1. A solenoid device that drives a valve unit of a solenoid valve provided to a fuel injection device by an electromagnetic force, the solenoid device comprising:
a core formed in a tubular shape and having an opposing surface that opposes the valve unit;
a coil wound around the core; and
a recessed portion provided in the opposing surface of the core at a position that overlaps with the valve unit as viewed from an axial direction of a central axis of the core.

2. The solenoid device according to Claim 1,
wherein the recessed portion has an annular shape centered on the central axis as viewed from the axial direction.

3. The solenoid device according to Claim 1 or 2,
wherein the core includes a magnetic body portion that is formed using a magnetic body, is open to a valve unit side, accommodates the coil, and includes an annular space section as viewed from the axial direction, and a sealing portion that is formed using a resin material and seals the space section, and
the recessed portion is provided at the sealing portion.

4. The solenoid device according to Claim 3,
wherein the magnetic body portion includes a chamfered section at an end portion of the space section on the side of the valve unit in the axial direction.

5. A solenoid valve of a fuel injection device comprising:
the solenoid device according to any one of Claims 1 to 4; and
a valve unit that is formed using a magnetic body, that is disposed to oppose the opposing surface of the core, to which an elastic force is applied in a direction away from the core in the axial direction, that presses, in a case where an electromagnetic force is not generated in the solenoid device, a fuel flow passage by the elastic force to close the flow passage, and that opens, in a case where an electromagnetic force is generated in the solenoid device, the flow passage by being pulled toward the core to a position, at which the valve unit comes into contact with the opposing surface, to be separated from the flow passage by the electromagnetic force.

6. The solenoid valve of the fuel injection device according to Claim 5,
wherein the valve unit includes an armature that opposes the opposing surface, and a valve body that extends from the armature in the axial direction,
the armature includes a through-hole that penetrates the armature in the axial direction, and
the recessed portion is disposed at a position that overlaps with the through-hole as viewed from the axial direction.
